# EUROPÄISCHE PATENTSCHRIFT

(11) **EP 2 395 639 B1**
(45) Veröffentlichungstag und Bekanntmachung des Hinweises auf die Patenterteilung: **01.04.2020**
(21) Anmeldenummer: 11162192.6
(22) Anmeldetag: 13.04.2011
(51) Int. Cl.: H02M 3/158, H02J 3/38, H02M 7/81, H02M 1/00

(54) **Schaltungsanordnung und Verfahren zur Erzeugung einer Wechselspannung aus mindestens einer Spannungsquelle mit zeitlich variabler Ausgangsgleichspannung**
Circuit assembly and method for generating alternating current from at least one power supply units with output DC voltage which varies over time
Agencement de commutation et procédé de production d'une tension alternative à partir d'au moins une source de tension ayant une tension continue de sortie variable dans le temps

(30) Priorität: 31.05.2010 US 334402 P
(43) Veröffentlichungstag der Anmeldung: 14.12.2011
(73) Patentinhaber: SEMIKRON Elektronik GmbH & Co. KG, 90431 Nürnberg (DE)
(72) Erfinder: Haddad, Kevork, Newark Valley, NY 13811 (US)

(56) Entgegenhaltungen:
- EP-A1- 1 928 078
- EP-A1- 2 058 921
- EP-A2- 1 271 742
- EP-A2- 2 001 111
- US-A- 5 980 095
- BLAABJERG F ET AL: "A Review of Single-Phase Grid-Connected Inverters for Photovoltaic Modules", IEEE TRANSACTIONS ON INDUSTRY APPLICATIONS, IEEE SERVICE CENTER, PISCATAWAY, NJ, US, vol. 41, no. 5, 1 September 2005 (2005-09-01), pages 1292-1306, XP011139229, ISSN: 0093-9994, DOI: 10.1109/TIA.2004.841166

## Beschreibung

Die Erfindung beschreibt eine Schaltungsanordnung, sowie ein Verfahren zu deren Ansteuerung, zur Erzeugung einer Wechselspannung aus einer Mehrzahl von ungeregelten Spannungsquellen mit zeitlich variabler Ausgangsgleichspannung. Als derartige ungeregelte Spannungsquellen sind Photovoltaikanlagen oder Teile dieser Anlagen bevorzugt. Unter einer Photovoltaikanlage soll hier ausschließlich die Anordnung und elektrische Verbindung einer Mehrzahl von Photovoltaikmodulen verstanden werden, Derartige Photovoltaikmodule sind zu Photovoltaikanlagen zusammengeschlossen und weisen eine bauartbedingte und von der Sonneneinstrahlung abhängige und somit zeitlich langsam variable Ausgangsgleichspannung auf.

Zu Einspeisung des Ausgangsstroms einer derartigen Photovoltaikanlage in das öffentliche oder ein lokales Stromnetz muss die Ausgangsgleichspannung, mittels einer Wechselrichterschaltung, in eine Wechselspannung konstanter Frequenz und Spannung umgewandelt werden.

Eine beispielhafte Schaltungsanordnung zur Erzeugung einer derartigen Wechselspannung ist in der DE 10 2008 034 955 A1 beschrieben. Hier ist eine Stromrichteranordnung offenbart, die eine Photovoltaikanlage mit zeitlich variierender Ausgangsspannung, einen Pegelwandler und einen Wechselrichter aufweist. In dem zugehörigen Verfahren wird der erste und zweite Kondensator des Pegelwandlers unabhängig von der Eingangsspannung mit jeweils dem halben Wert der Sollzwischenkreisspannung geladen.

Für derartige Schaltungsanordnungen gibt es eine Vielzahl vom Anwendungsfall abhängiger und sich teilweise widerstrebender Anforderungen. Beispielhaft soll die Eingangsspannung an der Wechselrichterschaltung möglichst konstant sein, wie auch die Übertragung von der Photovoltaikanlage zur Wechselrichterschaltung mit möglichst hoher Spannung erfolgen soll, um Leitungsverluste klein zu halten. Ebenso soll die gesamte Schaltungsanordnung mit einem hohen Wirkungsgrad arbeiten. Gleichzeitig sollte die Photovoltaikanlage, bzw. deren Photovoltaikmodule, derart betrieben werden, dass sie im Punkt der höchsten Leistungsabgabe (MPP - maximum power point) arbeitet. Hierzu ist eine geeignete Regelung, das sog. MPP- Tracking, erforderlich.

Weiterhin ist aus der EP 2 001 111 A2 eine Spannungsversorgungseinrichtung bekannt mit eine Aufwärtswandlerfunktion zur Erhöhung einer Eingangsgleichspannung. Hierbei sind zwei grundsätzlich bekannte Aufwärtswandler symmetrisch zueinander und zu einer Mittelanzapfung verschalten. In dieser Konfiguration werden die beiden Leistungsschalter der jeweiligen Aufwärtswandler simultan angesteuert.

Aus der EP 1 928 078 A1 ist ein Leistungswandler für einen Fahrzeug mit einem Elektromotor gespeist aus zwei Gelichspannungsquellen, einer Brennstoffzelle und einer Batterie, bekannt. Hierzu weist der Leistungswandler zwei mit den jeweiligen Gleichspannungsquellen verbundene DC-DC Wandler auf. Mit einem Zwischenkreis ist weiterhin ein Motorinverter zur Erzeugung einer Wechselspannung für eine Motor des Fahrzeugs verbunden.

Die EP 1 271 742 A2 offenbart eine Schaltungsanordnung zur Einspeisung eines in einer Photovoltaikanlage erzeugten Stromes in ein Wechselspannungsnetz. Die Schaltungsanordnung umfasst einen Aufwärtswandler zur Erhöhung der in der Photovoltaikanlage erzeugten Spannung, einen aus dem Aufwärtswandler gespeisten Wechselrichter und eine Kontrolleinrichtung zur Ansteuerung sowohl des Aufwärtswandlers, wie auch des Wechselrichters.

Der Erfindung liegt die Aufgabe zugrunde eine Schaltungsanordnung mit einer Mehrzahl von Teilschaltungsanordnung mit Aufwärtswandlerfunktion, die eine speisende ungeregelte Spannungsquelle aufweist, und ein Verfahren zu deren Ansteuerung vorzustellen.

Die Aufgabe wird erfindungsgemäß gelöst, durch eine Schaltungsanordnung mit den Merkmalen des Anspruchs 1, sowie durch ein Verfahren gemäß Anspruch 5, wobei die Teilschaltungsanordnung bei Erreichen eines Schwellenwerts der Ausgangsspannung der jeweiligen ungeregelten Spannungsquelle ohne Schaltbefehl einer übergeordneten Steuerlogik selbständig die Aufwärtswandlerfunktion aktiviert. Bevorzugte Ausführungsformen sind in den jeweiligen abhängigen Ansprüchen beschrieben.

Die erfindungsgemäße Schaltungsanordnung weist eine Mehrzahl parallel geschalteter Teilschaltungsanordnungen zur Speisung mindestens einer Wechselrichterschaltung, die mit einem zugeordneten Stromnetz verbindbar ist. Hierbei besteht jede Teilschaltungsanordnung aus einer ungeregelten Spannungsquelle mit zeitlich variierender Ausgangsgleichspannung, einem Synchronwandler (buck- boostinverter) mit einem ersten Kondensator geschaltet zwischen ersten Anschlüssen einer Schaltstufe und einer Reihenschaltung zweiter Kondensatoren an deren zweiten Anschlüssen, einer Gleichspannungsquelle und einer Regelschaltung zur Ansteuerung des Synchronwandlers.

Weiterhin ist in mindestens einer Zuleitung zwischen dem ersten Kondensator und den ersten Anschlüssen der Schaltstufe des Synchronwandlers noch mindestens eine Spule vorgesehen. Die Gleichspannungsquelle dient der Versorgung der Regelschaltung und wird selbst aus dem ersten oder einem der beiden zweiten Kondensatoren versorgt, wozu diese geeignet mit der Gleichspannungsquelle verbunden sind. Für eine der Betriebssicherheit dienenden redundanten Ausgestaltung weist diese Gleichspannungsquelle zwei Gleichspannungsteilquellen auf, die zu ihrer jeweiligen Versorgung mit dem ersten bzw. einem der zweiten Kondensatoren verbunden sind.

Die Regelschaltung ihrerseits weist vorzugsweise eine Mehrzahl von Messeinrichtungen zur Messung der Spannung und des Stroms am Ausgang der ungeregelten Spannungsquelle, des Stromes an den ersten Anschlüssen der Schaltstufe des Synchronwandlers und zur Messung der Spannung an den zweiten Kondensatoren und somit der Ausgangsspannung der Teilschaltungsanordnung auf.

Die Schaltstufe des Synchronwandlers der erfindungsgemäßen Schaltungsanordnung besteht vorteilhafterweise aus mindestens einer Wandlerstufe, die ihrerseits aus einer Reihenschaltung von vier Leistungstransistoren mit jeweils antiparallel geschalteter Diode besteht. Hierbei ist der erste Leistungstransistor mit dem zweiten Anschluss positiver Polarität verbunden, der Mittelpunkt zwischen ersten und zweiten Transistor ist mit dem ersten Anschluss positiver Polarität verbunden, der Mittelpunkt zwischen dritten und viertem Transistor ist mit dem ersten Anschluss negativer Polarität verbunden und der vierte Transistor ist mit dem zweiten Anschluss negativer Polarität verbunden. Ebenso ist es bevorzugt, wenn der Mittelpunkt zwischen zweitem und drittem Transistor mit dem Mittelpunkt der Reihenschaltung der zweiten Kondensatoren verbunden ist.

Als Wechselrichterschaltung sind grundsätzlich verschiedene Ausgestaltungen, vorzugsweise als Drei- Phasen- Wechselrichter vorsehbar. Besonders vorteilhaft ist es zwei Drei- Phasen- Wechselrichter parallel anzuordnen und um eine halbe Schaltperiode versetzten anzusteuern. Hierdurch ergibt sich ein vorteilhafter annährend sinusförmiger Strom- und Spannungsverlauf am Ausgang der Wechselrichterschaltung, die ihrerseits entweder direkt oder mittels eines Transformators mit dem Stromnetz verbindbar ist.

Das zugehörige erfindungsgemäße Verfahren zur Ansteuerung einer derartigen Schaltungsanordnung weist pro Teilschaltungsanordnung, neben dem Stand-by Zustand, in dem nur Überwachungsfunktionen aktiv sind, zwei weitere alternative Betriebsarten auf, deren jeweilige Funktion von einem Schwellenwert der Ausgangsspannung der ungeregelten Spannungsquelle des jeweiligen Teilzweiges abhängt.

Liegt der Wert der Ausgangsspannung der ungeregelten Spannungsquelle oberhalb dieses Schwellenwerts wird der Synchronwandler als Aufwärtswandler betrieben und lädt somit die zweiten Kondensatoren und legt einen, vorzugsweise bereits in der Ansteuerschaltung hinterlegten vordefinierten, Sollwert an die Ausgänge des Synchronwandlers an. Eine Mehrzahl gleichartiger Teilschaltungsanordnungen kann somit einfach parallel geschaltet werden, da alle aktiven Teilschaltungen die gleiche Ausgangsspannung aufweisen, ohne dass ein übergeordnet Steuerlogik hierauf notwendigerweise direkt und fortlaufen Einfluss nimmt.

Liegt der Wert der Ausgangsspannung der ungeregelten Spannungsquelle unterhalb dieses Schwellenwerts und ist der erste Kondensator nicht annährend vollständig geladen wird der Synchronwandler als Abwärtswandler betrieben und lädt somit den ersten Kondensator beispielhaft aus dem Stromnetz. Hierzu liefert der Wechselrichter eine Gleichspannung an den zweiten Anschlüssen der Schaltstufe des Synchronwandlers, der hieraus im Abwärtswandlerbetrieb die notwendige Spannung an den ersten Kondensator anlegt.

Aus der zweitgenannten Betriebsart, oder auch aus dem Stand-by Zustand mit geladenem ersten Kondensator, schaltet die Ansteuerschaltung den Synchronwandler unmittelbar in die erstgenannte Betriebsart sobald der Schwellenwert überschritten wird. Dieses Umschalten erfolgt autonom, da die notwendigen Messeinrichtungen zur Messung der Spannung und des Stromes der ungeregelten Spannungsquelle durch die aus der Gleichspannungsquelle gespeisten Ansteuerschaltung jederzeit möglich ist.

Die Gleichspannungsquelle ihrerseits wird hierzu kontinuierlich oder diskontinuierlich mittels des ersten und / oder eines zweiten Kondensators geladen und kann somit die Ansteuerschaltung des Synchronwandlers jederzeit versorgen. Zusätzlich kann, falls die ungeregelte Spannungsquelle eine Photovoltaikanlage ist, die Ansteuerschaltung das MPP- Tracking dieser Photovoltaikanlage ausführen.

Die erfinderische Lösung wird an Hand der Ausführungsbeispiele der Fig. 1 bis 3 weiter erläutert.
Fig. 1 zeigt das Grundprinzip einer ersten erfindungsgemäßen Schaltungsanordnung.
Fig. 2 zeigt wesentliche Komponenten einer zweiten Schaltungsanordnung.
Fig. 3 zeigt einige Komponenten der erfindungsgemäßen Schaltungsanordnung gemäß Fig. 2 in weiteren Details.

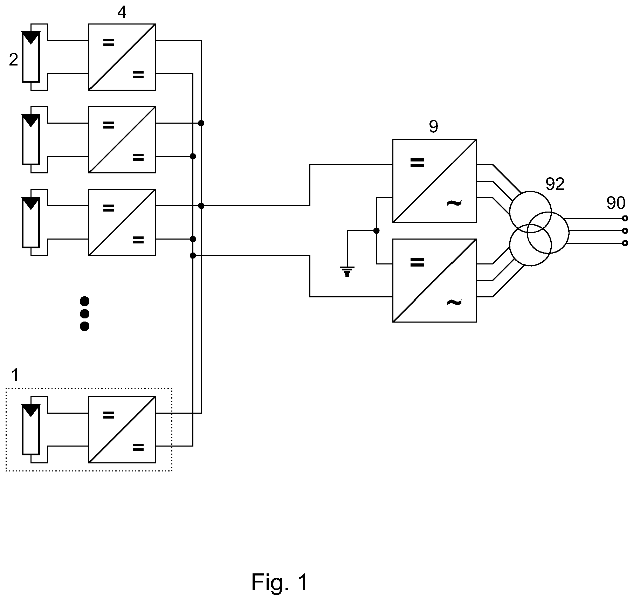

Fig. 1 zeigt das Grundprinzip einer ersten erfindungsgemäßen Schaltungsanordnung. Hierzu ist eine Mehrzahl von Teilschaltungsanordnungen (1) dargestellt, die ihrerseits aus einer ungeregelten Spannungsquelle (2) hier einer Photovoltaikanlage und einem Synchronwandler (4), der auch als buck- boost- inverter bekannt ist, dargestellt. Die Photovoltaikanlage (2) ihrerseits besteht aus einer Mehrzahl von Photovoltaikmodulen und weist eine typische, selbstverständlich von der Sonneneinstrahlung abhängige, Ausgangsspannung zwischen einigen hundert bis annährend tausend Volt auf.

Der mit der Photovoltaikanlage (2) verbundene Synchronwandler (4) hat die primäre Aufgabe die variable Ausgangsspannung der Photovoltaikanlage (2) derart zu erhöhen, dass eine mit dem Synchronwandler (4) verbundene Wechselrichterschaltung (9) eine mit der Ausgangsspannung gleiche Eingangsspannung aufweist, die einen mögliches effizient Betrieb dieser Wechselrichterschaltung (9) gestattet. Die Wechselrichterschaltung (9) selbst ist gemäß dem Stand der Technik ausgestaltet, hier als Parallelschaltung zweier Drei- Phasen Wechselrichter mit geerdetem Mittelpunkt. Diese Ausgestaltung ist nur beispielhaft und nicht beschränkend auf diese Ausführungsform. Weiterhin ist die Wechselrichterschaltung üblicherweise mittels eines geeigneten Transformators (92) mit dem zu speisenden Stromnetz (90) verbunden.

Es sind hier eine Mehrzahl von Teilschaltungsanordnungen (1) zu einer erfindungsgemäßen Schaltungsanordnung parallel miteinander verschaltet. Wesentlich ist hierbei selbstverständlich, dass die Synchronwandler (4) der Teilschaltungsanordnungen (1) auch bei unterschiedlicher Spannung der sie versorgenden Photovoltaikanlagen (2) jeweils die gleiche Ausgangsspannung zur Verfügung stellen.

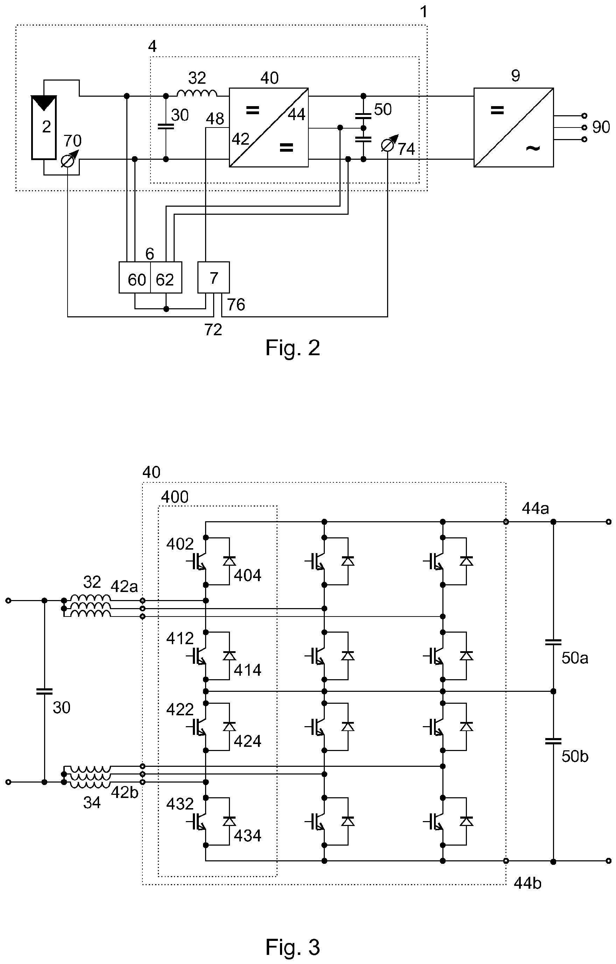

Fig. 2 zeigt zur weiteren Erläuterung der Erfindung wesentliche Komponenten einer zweiten Schaltungsanordnung mit nur einer Teilschaltungsanordnung. Dargestellt ist analog zu Fig. 1 wiederum eine Photovoltaikanlage (2) als ungeregelte Spannungsquelle, die mit einem Synchronwandler (4), seinerseits bestehend aus eine ersten Kondensator (30), einer Spule (32), einer Schaltstufe (40) und einer Reihenschaltung zweiter Kondensatoren (50), verbunden ist. Zwischen den ersten Anschlüssen (42) der Schaltstufe (40), und somit mit den Ausgängen der Photovoltaikanlage (2) verbunden ist der erste Kondensator (30) geschaltet. Zwischen diesem ersten Kondensator (30) und einem der ersten Anschlüsse (42) der Schaltstufe (40) hier demjenigen mit positivem Potential ist die Spule (32) vorgesehen. Der Ausgang des Synchronwandlers (4) ist mit einer Wechselrichterschaltung (9) verbunden, die ihrerseits mit dem zu speisenden Stromnetz (90) verbunden ist.

Weiterhin dargestellt ist eine Regelschaltung (7) zur autonomen Ansteuerung des Synchronwandlers (4). Diese Regelschaltung (7) weist hierzu erste Messeinrichtungen (70) zur Messung der Ausgangsspannung und des Ausgangsstroms der Photovoltaikanlage (2), ebenso wie zweite Messeinrichtungen (74) zur Bestimmung der Spannung an den zweiten Kondensatoren (50), auf.

Zur Energieversorgung dieser Regelschaltung (7) ist eine Gleichspannungsquelle (6) vorgesehen, die entweder aus dem ersten (30) oder einem der zweiten Kondensatoren (50) gespeist wird. Zur Versorgung der Gleichspannungsquelle (6) aus dem ersten Kondensator (30) kann der Synchronwandler (4) im Abwärtswandlerbetrieb arbeiten und somit die Spannung der Verbindungsleitung zur Wechselrichterschaltung (9), die an den zweiten Anschlüssen (44) anliegt und die mittels der Wechselrichterschaltung (9) im Gleichrichterbetrieb aus dem Stromnetz (90) gespeist sein kann, auf den erlaubten Spannungswert des ersten Kondensators (30) reduzieren. Es ist allerdings besonders bevorzugt, wie hier dargestellt, wenn die Gleichspannungsquelle (6) redundant mit zwei Gleichspannungsteilquellen (60, 62) ausgebildet ist und die jeweiligen Gleichspannungsteilquellen (60, 62) auf jeweils eine der beschriebenen Weisen gespeist wird.

Besonders vorteilhaft bei dieser Ausgestaltung der Schaltungsanordnung ist, dass diese nicht notwendigerweise eine Verbindung zu einer übergeordneten, nicht dargestellten, Steuerlogik benötigt, da sie autonom arbeiten kann. Dies bedeutet, dass die Photovoltaikanlage (2) von der, aus der Gleichspannungsquelle (6) gespeisten, Regelschaltung (7) überwacht wird und bei ausreichender Spannung an den Ausgängen der Photovoltaikanlage (2) der Synchronwandler (4) in den Aufwärtswandlerbetrieb geht und die notwendige Ausgangsspannung zur Verfügung stellt.

Fig. 3 zeigt einige Komponenten der erfindungsgemäßen Schaltungsanordnung gemäß Fig. 1 in weiteren Details. Dargestellt ist hier der Synchronwandler (4) ausgebildet mit einer Schaltstufe (40) mit drei identischen parallel geschalteten Wandlerstufen (400). Die jeweilige Wandlerstufe (400) besteht aus einer Reihenschaltung von vier Leistungstransistoren (402, 412, 422, 432) mit jeweils antiparallel geschalteter Diode (404, 414, 424, 434). Hierbei ist jeweils der erste Leistungstransistor (402) mit dem zweiten Anschluss (44a) positiver Polarität der Schaltstufe verbunden ist, der Mittelpunkt zwischen jeweiligem ersten (402) und zweiten Transistor (412) ist mit einem ersten Anschluss (42a) positiver Polarität verbunden, der Mittelpunkt zwischen jeweiligem dritten (422) und viertem Transistor (432) ist mit einem ersten Anschluss (42b) negativer Polarität verbunden und der vierte Transistor (432) ist mit dem zweiten Anschluss (44b) negativer Polarität verbunden.

Die drei ersten Anschlüsse (42 a/b) positiver und negativer Polarität der Schaltstufe (40) sind hierbei den drei Wandlerstufen (400) zugeordnet und weisen jeweils eine eigene Spule (32, 34) auf. Üblicherweise weisen diese jeweiligen Spulen (32, 34) einen eigenen Kern auf, es kann allerdings um Kopplungseffekte zu erzielen auch bevorzugt sein die den jeweiligen Polaritäten zugeordneten Spulen (32 ,34) auf einem gemeinsamen Kern vorzusehen.

Die beiden zweiten Anschlüsse (44 a/b) der Schaltstufe (40) sind mit der Parallelschaltung der zweiten Kondensatoren (50 a/b) verbunden, wobei der Mittelpunkt dieser Parallelschaltung mit den Mittelpunkten der jeweiligen Wandlerstufen (400) verbunden ist.

## Patentansprüche

1. Schaltungsanordnung mit einer Mehrzahl parallel geschalteter Teilschaltungsanordnungen (1) zur Speisung mindestens einer Wechselrichterschaltung (9), die mit einem Stromnetz (90) verbindbar ist, wobei eine Teilschaltungsanordnung (1) besteht aus einer ungeregelten Spannungsquelle (2) mit zeitlich variierender Ausgangsgleichspannung, einem Synchronwandler (4) mit einem ersten Kondensator (30) geschaltet zwischen den ersten Anschlüssen (42 a/b) einer Schaltstufe (40) des Synchronwandlers und einer Reihenschaltung zweiter Kondensatoren (50 a/b) an deren zweiten Anschlüssen (44 a/b), wobei in mindestens einer Zuleitung zwischen dem ersten Kondensator (30) und den ersten Anschlüssen (42 a/b) noch mindestens eine Spule (32, 34) vorgesehen ist, mit einer jeweiligen Gleichspannungsquelle (6), die redundant (60, 62) ausgeführt ist und zu ihrer Versorgung mit dem ersten (30) und einem der zweiten Kondensatoren (50 a/b) verbunden ist, zur Versorgung einer Regelschaltung (7) zur Ansteuerung des Synchronwandlers (4), der dazu ausgebildet ist mindestens eine erste Betriebsart, in der die Reihenschaltung zweiter Kondensatoren (50 a/b) aus der an den ersten Anschlüssen (42 a/b) anliegenden Gleichspannung geladen wird, als Aufwärtswandler und eine zweite Betriebsart, in der der erste Kondensator (30) aus der an den zweiten Anschlüssen (44 a/b) anliegenden Gleichspannung geladen wird, als Abwärtswandler aufzuweisen, mit einer Mehrzahl von Messeinrichtungen (70, 74), wobei die jeweilige Gleichspannungsquelle (6) dazu ausgebildet ist in beiden Betriebsarten des Synchronwandlers (4) mittels des ersten (30) und / oder dem einen der zweiten Kondensatoren (50 a/b) geladen zu werden und ihrerseits die Regelschaltung (7) des Synchronwandlers (4) zu versorgen und somit der jeweilige Synchronwandler (4) mittels der Regelschaltung (7) bei Überschreiten eines Schwellenwertes der Ausgangsspannung der ungeregelten Spannungsquelle autonom und unmittelbar von der zweiten in die erste Betriebsart umgeschaltet zu werden.

2. Schaltungsanordnung nach Anspruch 1, wobei
die Schaltstufe (40) des Synchronwandlers aus mindestens einer Wandlerstufe (400) besteht, die ihrerseits aus einer Reihenschaltung von vier Leistungstransistoren (402, 412, 422, 432) mit jeweils antiparallel geschalteter Diode (404, 414, 424, 434) besteht, wobei der erste Leistungstransistor (402) mit einem zweiten Anschluss (44a) positiver Polarität verbunden ist, der Mittelpunkt zwischen ersten (402) und zweiten Leistungstransistor (412) mit einem ersten Anschluss (42a) positiver Polarität verbunden ist, der Mittelpunkt zwischen dritten (422) und vierten Leistungstransistor (432) mit dem ersten Anschluss (42b) negativer Polarität verbunden ist und der vierte Leistungstransistor (432) mit dem zweiten Anschluss (44b) negativer Polarität verbunden ist.

3. Schaltungsanordnung nach Anspruch 2, wobei
bei einer Mehrzahl von Wandlerstufen (400) die zugeordneten Spulen jeweils auf einem eigenen Kern, oder gekoppelt auf einem gemeinsamen Kern angeordnet sind.

4. Schaltungsanordnung nach Anspruch 2, wobei
der Mittelpunkt zwischen zweitem (412) und drittem Leistungstransistor (422) mit dem Mittelpunkt der Reihenschaltung der zweiten Kondensatoren (50 a/b) verbunden ist.

5. Verfahren zur Ansteuerung einer Schaltungsanordnung nach einem der vorhergehenden Ansprüche,
wobei
zur Regelung der Betriebsart des Synchronwandlers (4) mittels der Messeinrichtungen (70, 74) die Spannung und der Strom am Ausgang der ungeregelten Spannungsquelle (2) und die jeweilige Spannung an mindestens einem der beiden zweiten Kondensatoren (50 a/b) gemessen wird.

6. Verfahren nach Anspruch 5, wobei die Regelschaltung (7) zusätzlich das MPP- Tracking der als Photovoltaikanlage ausgestalteten ungeregelten Spannungsquelle regelt.

## Claims

1. Circuit arrangement having a plurality of parallel-connected partial circuit arrangements (1) for feeding at least one inverter circuit (9) that is connectable to a power grid (90), wherein a partial circuit arrangement (1) consists of an unregulated voltage source (2) having an output DC voltage that varies over time, a synchronous converter (4) having a first capacitor (30) connected between the first terminals (42a/b) of a switching stage (40) of the synchronous converter and a series circuit of second capacitors (50a/b) at the second terminals (44a/b) of said switching stage, wherein at least one coil (32, 34) is also provided in at least one lead between the first capacitor (30) and the first terminals (42a/b), having a respective DC voltage source (6), which is embodied in redundant fashion (60, 62) and, for its supply, is connected to the first capacitor (30) and one of the second capacitors (50a/b), for supplying a regulating circuit (7) for driving the synchronous converter (4), which is configured to have at least a first operating mode, in which the series circuit of second capacitors (50a/b) is charged from the DC voltage present at the first terminals (42a/b), as up-converter and a second operating mode, in which the first capacitor (30) is charged from the DC voltage present at the second terminals (44a/b), as down-converter, having a plurality of measuring devices (70, 74), wherein the respective DC voltage source (6) is configured, in both operating modes of the synchronous converter (4), to be charged by means of the first capacitor (30) and/or said one of the second capacitors (50a/b) and in turn to supply the regulating circuit (7) of the synchronous converter (4), and thus by means of the regulating circuit (7), upon a threshold value of the output voltage of the unregulated voltage source being exceeded, the respective synchronous converter (4) to be switched over autonomously and directly from the second to the first operating mode.

2. Circuit arrangement according to Claim 1, wherein
the switching stage (40) of the synchronous converter consists of at least one converter stage (400), which in turn consists of a series circuit of four power transistors (402, 412, 422, 432), each with an antiparallel-connected diode (404, 414, 424, 434), wherein the first power transistor (402) is connected to a second terminal (44a) of positive polarity, the centre point between first power transistor (402) and second power transistor (412) is connected to a first terminal (42a) of positive polarity, the centre point between third power transistor (422) and fourth power transistor (432) is connected to the first terminal (42b) of negative polarity, and the fourth power transistor (432) is connected to the second terminal (44b) of negative polarity.

3. Circuit arrangement according to Claim 2, wherein
in the case of a plurality of converter stages (400), the assigned coils are each arranged on a dedicated core, or in a coupled manner on a common core.

4. Circuit arrangement according to Claim 2, wherein
the centre point between second power transistor (412) and third power transistor (422) is connected to the centre point of the series circuit of the second capacitors (50a/b).

5. Method for driving a circuit arrangement according to any of the preceding claims,
wherein
for the purpose of regulating the operating mode of the synchronous converter (4) by means of the measuring devices (70, 74), the voltage and the current at the output of the unregulated voltage source (2) and the respective voltage at at least one of the two second capacitors (50a/b) are measured.

6. Method according to Claim 5, wherein
the regulating circuit (7) additionally regulates the MPP tracking of the unregulated voltage source configured as a photovoltaic installation.

## Revendications

1. Arrangement de circuit comprenant une pluralité d'arrangements de circuit partiels (1) branchés en parallèle destinés à alimenter au moins un circuit onduleur (9) qui peut être relié à un réseau électrique (90), un arrangement de circuit partiel (1) se composant d'une source de tension (2) non régulée ayant une tension continue de sortie qui varie dans le temps, un convertisseur synchrone (4) comprenant un premier condensateur (30) branché entre les premières bornes (42 a/b) d'un étage de commutation (40) du convertisseur synchrone et un circuit série constitué de deuxièmes condensateurs (50 a/b) à ses deuxièmes bornes (44 a/b), au moins une bobine (32, 34) étant encore présente dans au moins une ligne d'arrivée entre le premier condensateur (30) et les premières bornes (42 a/b), comprenant une source de tension continue (6) respective qui est réalisée redondante (60, 62) et, pour son alimentation, est reliée au premier (30) et à l'un des deuxièmes condensateurs (50 a/b), servant à l'alimentation d'un circuit de régulation (7) destiné à la commande du convertisseur synchrone (4), lequel est configuré pour posséder au moins un premier mode de fonctionnement, dans lequel le circuit série constitué des deuxièmes condensateurs (50 a/b) est chargé par la tension continue appliquée aux premières bornes (42 a/b), en tant que convertisseur élévateur et un deuxième mode de fonctionnement, dans lequel le premier condensateur (30) est chargé par la tension continue appliquée aux deuxièmes bornes (44 a/b), en tant que convertisseur abaisseur, comprenant une pluralité de dispositifs de mesure (70, 74), la source de tension continue (6) respective étant configurée pour être chargée dans les deux modes de fonctionnement du convertisseur synchrone (4) au moyen du premier (30) et/ou dudit un des deuxièmes condensateurs (50 a/b) et alimenter de son côté le circuit de régulation (7) du convertisseur synchrone (4) et ainsi le convertisseur synchrone (4) respectif pour être permuté de manière autonome et directement du deuxième dans le premier mode de fonctionnement au moyen du circuit de régulation (7) en cas de dépassement d'une valeur de seuil de la tension de sortie de la source de tension non régulée.

2. Arrangement de circuit selon la revendication 1, l'étage de commutation (40) du convertisseur synchrone se composant d'au moins un étage convertisseur (400) qui, de son côté, se compose d'un circuit série constitué de quatre transistors de puissance (402, 412, 422, 432) comportant respectivement une diode (404, 414, 424, 434) branchée en tête-bêche, le premier transistor de puissance (402) étant relié à une deuxième borne (44a) à la polarité positive, le point intermédiaire entre le premier (402) et le deuxième transistor de puissance (412) étant relié à une première borne (42a) à la polarité positive, le point intermédiaire entre le troisième (422) et le quatrième transistor de puissance (432) étant relié à la première borne (42b) à la polarité négative et le quatrième transistor de puissance (432) étant relié à la deuxième borne (44b) à la polarité négative.

3. Arrangement de circuit selon la revendication 2, avec lequel, dans le cas d'une pluralité d'étages convertisseurs (400), les bobines associées sont respectivement disposées sur un noyau propre ou couplées sur un noyau commun.

4. Arrangement de circuit selon la revendication 2, avec lequel le point intermédiaire entre le deuxième (412) et le troisième transistor de puissance (422) est relié au point intermédiaire du circuit série constitué des deuxièmes condensateurs (50 a/b).

5. Procédé pour commander un arrangement de circuit selon l'une des revendications précédentes, selon lequel, pour la régulation du mode de fonctionnement du convertisseur synchrone (4), la tension et le courant à la sortie de la source de tension (2) non régulée ainsi que la tension respective aux bornes d'au moins l'un des deux des deuxièmes condensateurs (50 a/b) sont mesurés au moyen des dispositifs de mesure (70, 74).

6. Procédé selon la revendication 5, le circuit de régulation (7) régulant en plus le suivi du MPP de la source de tension non régulée réalisée sous la forme d'une installation photovoltaïque.
